# EUROPÄISCHE PATENTSCHRIFT

(11) **EP 0 834 061 B1**
(45) Veröffentlichungstag und Bekanntmachung des Hinweises auf die Patenterteilung: **05.12.2001**
(21) Anmeldenummer: 96914141.5
(22) Anmeldetag: 26.04.1996
(51) Int. Cl.: G01M 3/20

(54) **LECKSUCHGERÄT MIT VORVAKUUMPUMPE**
LEAK DETECTOR WITH BACK-UP PUMP
APPAREIL DE DETECTION DE FUITE DOTE D'UNE POMPE A PREVIDE

(30) Priorität: 21.06.1995 DE 19522466
(43) Veröffentlichungstag der Anmeldung: 08.04.1998
(73) Patentinhaber: Leybold Vakuum GmbH, 50968 Köln (DE)
(72) Erfinder: BÖHM, Thomas, D-50859 Köln (DE)
(74) Vertreter: Leineweber, Jürgen, Dipl.-Phys.
(86) Internationale Anmeldenummer: EP9601772
(87) Internationale Veröffentlichungsnummer: WO9701084

(56) Entgegenhaltungen:
- BE-A- 859 352
- DE-A- 4 228 313
- TECHNISCHES MESSEN TM 1982 - 1988 1 INCOMPLETE., Bd. 54, Nr. 3, 1987, MUNCHEN DE, Seiten 96-99, XP002010823 R. HEINEN: "NEUE GENERATION VON HELIUM-LECKSUCHERN MIT ERWEITERTER DIAGNOSEFÄHIGKEIT"

## Beschreibung

Die Erfindung bezieht sich auf ein mit Helium als Testgas betriebenes Lecksuchgerät mit den Merkmalen des Oberbegriffs des Patentanspruchs 1.

Bekannte Lecksuchgeräte der hier betroffenen Art sind mit einem Testgasdetektor (üblicherweise ein Massenspektrometer), einer vom Testgas entgegen ihrer Förderrichtung durchströmten Hochvakuumpumpe sowie einer ersten der Hochvakuumpumpe nachgeordneten, relativ kleinen Vorvakuumpumpe ausgerüstet. Außerdem ist eine weitere Vorvakuumpumpe mit einem relativ großen Saugvermögen vorgesehen, die der Evakuierung der Prüflinge bzw. einer Testkammer für auf Lecks zu untersuchende Prüflinge dient. Der Grund dafür, zwei Vorvakuumpumpen einzusetzen liegt darin, daß einerseits eine schnelle Evakuierung des Prüflings bzw. der Testkammer möglich sein soll. Dazu wird das Saugvermögen der zweiten Vorvakuumpumpe möglichst hoch gewählt. Die Erzeugung des von der Hochvakuumpumpe benötigten Vorvakuums mit Hilfe dieser zweiten Vorvakuumpumpe wäre zwar auch möglich; es müßte dann aber eine nicht unerhebliche Empfindlichkeitseinbuße hingenommen werden. Um dieses zu vermeiden, ist der Hochvakuumpumpe die separate Vorvakuumpumpe mit relativ kleinem Saugvermögen zugeordnet.

Ein Lecksuchgerät mit den Merkmalen des Oberbegriffs des Patentansprüches 1 ist aus der DE-A-42 28 313 bekannt.

Der vorliegenden Erfindung liegt die Aufgabe zugrunde, bei einem Lecksuchgerät der hier betroffenen Art den für die Erzeugung des Vorvakuums erforderlichen Aufwand zu reduzieren, ohne einen Empfindlichkeitsverlust in Kauf nehmen zu müssen.

Erfindungsgemäß wird diese Aufgabe durch die kennzeichnenden Merkmale der Patentansprüche gelöst.

Die vorgeschlagenen Maßnahmen ermöglichen es, auf eine gesonderte Vorvakuumpumpe für die Hochvakuumpumpe zu verzichten. Die Ventile können derart geschaltet werden, daß zum einen die Evakuierung des Prüflings bzw. der an das Lecksuchgerät angeschlossenen Prüfkammer sehr schnell durchgeführt werden kann und zum anderen eine Feinlecksuche möglich ist.

Besonders zweckmäßig ist es, wenn als Vorvakuumpumpe eine nach dem Spiralprinzip arbeitende Verdrängervakuumpumpe eingesetzt wird, wie sie beispielsweise aus der DE-A-29 27 690 bekannt ist. Pumpen dieser Art benötigen kein Dichtmittel (Öl) im Schöpfraum, so daß - wenn die Hochvakuumpumpe eine Reibungspumpe ist - nur ölfreie Vakuumpumpen vorhanden sind. Die Gefahr der Kontamination des Prüflings oder der Testkammer mit Kohlenwasserstoffmolekülen besteht nicht.

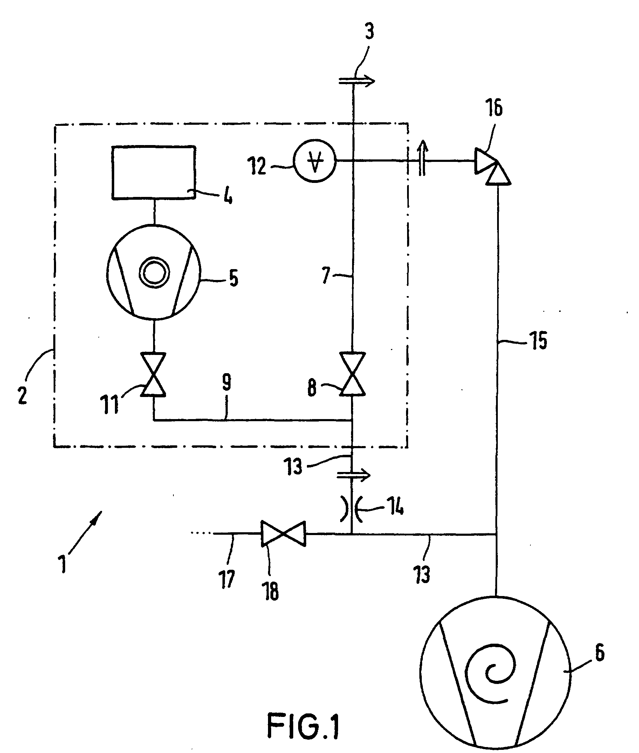

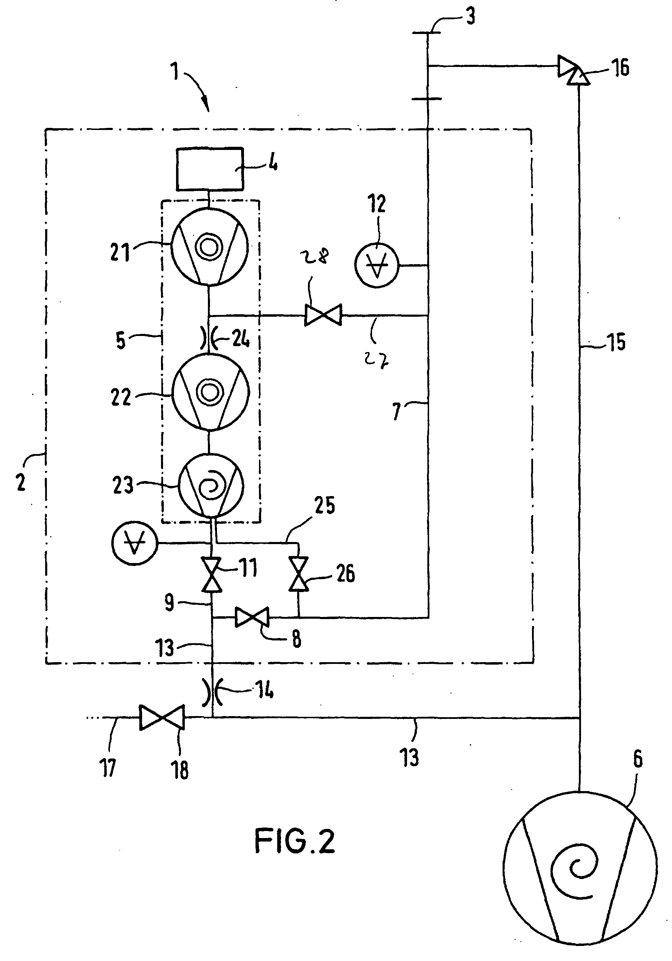

Weitere Vorteile und Einzelheiten sollen anhand von in den Figuren 1 und 2 dargestellten Ausführungsbeispielen erläutert werden. Es zeigen
- Figur 1 ein Lecksuchgerät mit einer einstufigen Hochvakuumpumpe im Oberteil und
- Figur 2 ein Lecksuchgerät mit einer mehrstufigen Hochvakuumpumpe.

Bei beiden Ausführungsbeispielen sind das Lecksuchgerät insgesamt mit 1, sein Oberteil mit 2 (strichpunktierte Linie), der Einlaß bzw. Prüflingsanschluß mit 3, der Testgasdetektor mit 4, die Hochvakuumpumpe mit 5 und die außerhalb des Oberteils 2 befindliche Vorvakuumpumpe mit 6 bezeichnet. Der Prüflingsanschluß 3 steht über die Leitungsabschnitte 7 (mit Ventil 8) und 9 (mit Ventil 11) mit dem Auslaß der Hochvakuumpumpe 5 in Verbindung. An die Leitung 7 ist das Druckmeßgerät 12 angeschlossen. Zwischen den Ventilen 8 und 11 ist eine Leitung 13 angeschlossen, die zum Einlaß der Vorvakuumpumpe 6 führt und mit der Drossel 14 ausgerüstet ist. Außerdem stehen der Prüflingsanschluß 3 und der Einlaß der Vorvakuumpumpe 6 über die Leitung 15 mit dem Ventil 16 in Verbindung. Mit 17 ist noch eine Leitung mit einem Ventil 18 bezeichnet, welche in die Leitung 13 mündet und - wie weiter unten beschrieben - der Zufuhr von Spülgas dient.

Beim Ausführungsbeispiel nach Figur 1 ist die Hochvakuumpumpe 5 eine einstufige Turbomolekularpumpe. Im Standby sind alle Ventile - außer Ventil 11 - geschlossen. In dieser Phase erzeugt die Hochvakuumpumpe 5 den für den Betrieb des Massenspektrometers 4 notwendigen Druck. Das für den Betrieb der Hochvakuumpumpe 5 notwendige Vorvakuum erzeugt die Vorvakuumpumpe 6, deren Einlaß über die Leitungen 9 (mit offenem Ventil 11) und 13 mit dem Auslaß der Hochvakuumpumpe 5 in Verbindung steht.

Um mit der Messung zu beginnen, werden das Ventil 11 geschlossen und die Ventile 8 und 16 geöffnet. Damit steht der Prüflingsanschluß 3 über einen insgesamt relativ großen Strömungsquerschnitt mit der Vorvakuumpumpe in Verbindung. Das relativ große Saugvermögen der Vorvakuumpumpe 6 kann voll genutzt werden, so daß eine schnelle Evakuierung des Prüflings möglich ist. Ist der vom Druckmeßgerät 12 registrierte Druck ausreichend niedrig (z.B. kleiner 2 mbar), kann mit der Groblecksuche begonnen werden. Dazu wird das Ventil 11 geöffnet. Eventuell angesaugtes Testgas gelangt über die Leitungen 7, 9 sowie im Gegenstrom durch die Hochvakuumpumpe 5 in den Testgasdetektor 4 und wird mit dessen Hilfe registriert. Während der Groblecksuche nimmt der Einlaßdruck weiter ab. Erreicht er z.B. 0,05 mbar, kann mit der Feinlecksuche begonnen werden. Dazu wird das Ventil 16 geschlossen. In dieser Phase ist bei infolge der Drossel 14 reduziertem Saugvermögen der Vorvakuumpumpe 5 der Nachweis kleinster Leckraten möglich.

Um nach dem Messen auf Standby zu schalten, werden zunächst alle Ventile geschlossen und das Ventil 18 geöffnet. Über die Leitung 17 wird Spülgas (z.B. Luft) zugeführt, mit der ein Heliumuntergrund abgebaut werden kann, der sich gegebenenfalls während der Messung in der Vorvakuumpumpe 5 aufgebaut hat. Dazu reicht es aus, wenn das Ventil 18 für kurze Zeit (z.B. 10 bis 20 s) geöffnet wird.

Beim Ausführungsbeispiel nach Figur 2 ist die Hochvakuumpumpe 5 mehrstufig ausgebildet. Sie umfaßt drei Reibungspumpenstufen (21, 22, 23), von denen zwei (21, 22) als Turbomolekularpumpenstufen ausgebildet sind. Zwischen diesen Stufen befindet sich die Drossel 24. Die vorvakuumseitig befindliche Stufe 23 ist als Molekularpumpe gestaltet und verbessert damit die Vorvakuumbeständigkeit der Hochvakuumpumpe 5. Den Ventilen 8, 11 ist eine Bypass-Leitung 25 mit dem Ventil 26 zugeordnet. An die Leitung 7 ist noch die Leitung 27 mit dem Ventil 28 angeschlossen, die in die Verbindungsleitung zwischen den beiden Turbomolekularpumpenstufen 21, 22, und zwar in Förderrichtung oberhalb der Drossel 24, mündet.

Wie beim Ausführungsbeispiel nach Figur 1 sind im Standby alle Ventile - außer Ventil 11 - geschlossen. Auch der erste Teil der Meßphase - Evakuierung des Prüflings - entspricht der Ausführung nach Figur 1. Die Groblecksuche beginnt mit dem Öffnen der Ventile 11 und 26. Wegen der verbesserten Vorvakuumbeständigkeit der Hochvakuumpumpe kann dieses bereits bei einem Druck von etwa 2 mbar geschehen. Bei einem Druck von etwa 0,1 mbar öffnet Ventil 28 und 26 wird geschlossen. Mit diesem Schritt ist eine Empfindlichkeitssteigerung verbunden. Bei einem Druck von 5.10⁻² mbar schließt Ventil 16, so daß danach auch kleinste Lecks feststellbar sind.

Die Eigenschaften der Drossel 14 sind so gewählt, daß das oberhalb der Drossel wirksame Saugvermögen nur noch 10-20% des vollen Saugvermögens der Vorvakuumpumpe 6 beträgt. Entsprechend der Abnahme des wirksamen Saugvermögens steigt die Empfindlichkeit des Lecksuchers.

## Patentansprüche

1. Mit Helium als Testgas betriebenes Lecksuchgerät (1) mit einem dem Anschluß eines Prüflings oder einer Testkammer dienenden Einlaß (3), mit einem Detektor (4), mit einer an den Detektor angeschlossenen, entgegen ihrer Förderrichtung vom Testgas durchströmten Hochvakuumpumpe (5), mit einer Vorvakuumpumpe (6), mit einer sich an den Auslaß der Hochvakuumpumpe (5) anschließenden ersten Leitung (9) mit einem Ventil (11), mit einer sich an den Einlass (3) anschließenden zweiten Leitung (7) mit einem Ventil (8) und mit einer dritten Leitung (13), die sich als gemeinsame Leitung an die ersten und zweiten Leitungen (7) und (9) anschließt und zum Einlass der Vorvakuumpumpe (6) führt, **dadurch gekennzeichnet, daß** die dritte Leitung (13) mit einer Drossel (14) ausgerüstet ist und daß eine den Prüflingsanschluß (3) unmittelbar mit dem Einlaß der Vorvakuumpumpe (6) verbindende, mit einem Ventil (16) ausgerüstete Leitung (15) vorhanden ist.

2. Lecksuchgerät nach Anspruch 1, **dadurch gekennzeichnet, daß** die Vorvakuumpumpe (6) eine Verdrängerpumpe nach dem Spiralprinzip ist.

3. Lecksuchgerät nach Anspruch 1 oder 2, **dadurch gekennzeichnet, daß** die Leitung (13), vorzugsweise zwischen der Drossel (14) und dem Einlaß der Vorvakuumpumpe (6) mit einem Spülgaseinlaß (17, 18) ausgerüstet ist.

4. Lecksuchgerät nach Anspruch 1, 2, 3, **dadurch gekennzeichnet, daß** die Hochvakuumpumpe (5) eine mehrstufig ausgebildete Reibungspumpe ist.

## Claims

1. A leak indicator (1) which is operated using helium as a test gas, said leak indicator having an inlet (3) which serves for the connection of a test piece or a test chamber, having a detector (4), having a high-vacuum pump (5) which is connected to the detector (4) and through which test gas flows in opposition to its conveying direction, having a backing pump (6), having a first line (9) which adjoins the outlet of the high-vacuum pump (5) and has a valve (11), having a second line (7) which adjoins the inlet (3) and has a valve (8), and having a third line (13) which adjoins the first and second lines (7) and (9) as a common line and leads to the inlet of the backing pump (6),
**characterised in that** the third line (13) is equipped with a restrictor (14) and **in that** there is a line (15) which connects the test-piece connection (3) directly to the inlet of the backing pump (6) and is equipped with a valve (16).

2. A leak indicator according to Claim 1,
**characterised in that** the backing pump (6) is a positive-displacement pump according to the spiral principle.

3. A leak indicator according to Claim 1 or 2,
**characterised in that** the line (13) is equipped with a purging-gas inlet (17, 18), preferably between the restrictor (14) and the inlet of the backing pump (6).

4. A leak indicator according to Claim 1, 2, 3,
**characterised in that** the high-vacuum pump (5) is a multi-stage friction pump.

## Revendications

1. Appareil de détection de fuite (1) fonctionnant à l'hélium servant de gaz témoin, comportant une admission (3) servant au raccordement d'un échantillon ou d'une chambre d'essai, un détecteur (4), une pompe à vide poussé (5) raccordée au détecteur et traversée par le gaz témoin dans le sens inverse à son sens de refoulement, une pompe à vide préliminaire (6), une première conduite (9) se raccordant à la sortie de la chambre à vide poussé par une soupape (11), une deuxième conduite (7) se raccordant à l'entrée (3) par une soupape (8) et une troisième conduite (13) qui, en tant que conduite commune, se raccorde aux première et deuxième conduites (7 et 9) et mène à l'admission de la pompe à vide préliminaire (6), **caractérisé en ce que** la troisième conduite (13) est équipée d'un étranglement (14) et **en ce qu'**il y a une conduite (15) équipée d'une soupape (16), reliant le raccord d'échantillon (3) directement à l'admission de la chambre à vide préliminaire (6).

2. Appareil de détection de fuite selon la revendication 1, **caractérisé en ce que** la pompe à vide préliminaire (6) est une pompe de refoulement selon le principe à spirale.

3. Appareil de détection de fuite selon l'une ou l'autre des revendications 1 et 2, **caractérisé en ce que** la conduite (13) est équipée d'une admission à gaz de purge (17, 18) de préférence entre l'étranglement (14) et l'admission de la pompe à vide préliminaire (6).

4. Appareil de détection de fuite selon la revendication 1, 2, 3, **caractérisé en ce que** la pompe à vide poussé (5) est une pompe à friction réalisée à plusieurs étages.
